(19) **Europäisches Patentamt**

**European Patent Office**

**Office européen des brevets**

(11) Veröffentlichungsnummer : **0 368 947 B1**

(12) # EUROPÄISCHE PATENTSCHRIFT

(45) Veröffentlichungstag der Patentschrift :
**28.10.92 Patentblatt 92/44**

(51) Int. Cl.⁵ : **B60C 23/04, B60C 23/20**

(21) Anmeldenummer : **89902936.7**

(22) Anmeldetag : **09.03.89**

(86) Internationale Anmeldenummer :
**PCT/DE89/00151**

(87) Internationale Veröffentlichungsnummer :
**WO 89/11402 30.11.89 Gazette 89/28**

(54) **REIFENDRUCK- UND TEMPERATURSENSOR.**

(30) Priorität : **28.05.88 DE 3818207**

(43) Veröffentlichungstag der Anmeldung :
**23.05.90 Patentblatt 90/21**

(45) Bekanntmachung des Hinweises auf die
Patenterteilung :
**28.10.92 Patentblatt 92/44**

(84) Benannte Vertragsstaaten :
**DE FR GB IT SE**

(56) Entgegenhaltungen :
**WO-A-87/00128**
**WO-A-87/03545**

(73) Patentinhaber : **TELEFUNKEN electronic
GmbH
Theresienstrasse 2
W-7100 Heilbronn (DE)**

(72) Erfinder : **METZGER, Kurt
Hartingbergstrasse 31
W-8501 Altenberg (DE)**
Erfinder : **HETTICH, Gerhard
Martin-Renz-Strasse 8
W-8501 Dietenhofen (DE)**
Erfinder : **DÖRFLER, Reiner
Maxplatz 7
W-8500 Nürnberg 1 (DE)**

(74) Vertreter : **Maute, Hans-Jürgen, Dipl.-Ing.
TELEFUNKEN electronic GmbH
Theresienstrasse 2
W-7100 Heilbronn (DE)**

## Beschreibung

### Stand der Technik

Die Erfindung geht aus von einem Sensor zur Ermittlung von Druck und Temperatur der Luft in einem Fahrzeugreifen nach dem Oberbegriff des Patentanspruchs 1.

Aus der WO 87/035 45 ist es bekannt, eine Membrandose, die einen elektrischen Kontakt trägt, in ein Isolierstoffgehäuse einzusetzen, das in eine Gewindebohrung einer Radfelge eingeschraubt wird. Damit wird die Membrandose von der Radfelge thermisch entkoppelt, so daß sie die Temperatur der Reifenluft annimmt und der Referenzdruck in der Membrandose durch die Felgentemperatur nicht beeinflußt wird. Durch die Ankopplung der Membrandose an die Temperatur der Reifenluft wird bei der Reifendrucküberwachung eine temperaturabhängige Änderung des Reifendruckes durch eine entsprechende Änderung des Referenzdruckes in der Membrandose kompensiert, so daß bei zu geringem Reifendruck mit dem elektrischen kontakt ein Schaltvorgang und damit ein Warnsignal ausgelöst wird, welches drahtlos von dem umlaufenden Sensor auf eine fahrzeugfeste Auswerteschaltung übertragen wird.

Bei Halbleiter-Sensoren, welche den absoluten Luftdruck im Reifen und die Temperatur unabhängig voneinander messen, ist es aus der nachveröffentlichten DE 37 28 043 C1 bekannt, die Halbleiter-Sensoren auf einer Isolierstoffplatte anzuordnen, die in der Mitte eines metallischen Sensorgehäuses aufgenommen ist. Das Gehäuse ist in einer entsprechenden Öffnung der Radfelge einzusetzen. Dabei wird die Temperatur der Felge auf das Sensorgehäuse übertragen und gelangt teils durch Wärmeleitung über die Isolierstoffplatte, teils durch Wärmestrahlung zu den Sensoren. Da die Temperatur der Radfelge durch die Nähe der Bremse, aber auch durch den Fahrtwind erheblich von der Temperatur im Reifen abweichen kann, werden durch diese thermische Kopplung der Sensoren mit der Radfelge verfälschte Werte ermittelt, welche einen Fehlalarm auslösen können und in kritischen Fällen sogar einen erforderlichen Alarm unterdrücken.

Mit der vorliegenden Lösung wird angestrebt, die Temperatur-Sensorelemente des Sensors einerseits von der Radfelge möglichst gut thermisch zu entkoppeln und andererseits möglichst eng an die Temperatur der Reifenluft anzukoppeln.

### Vorteile der Erfindung

Der erfindungsgemäße Sensor mit den Merkmalen des Hauptanspruchs hat den Vorteil, daß es durch die die Temperatur-Sensorelemente umgebende Reifenluft möglich ist, eine gute thermische Ankopplung des Temperatursensors an die Temperatur der Reifenluft zu bekommen. Dadurch ist das im Reifen vorhandene Reifenfüllgas genauer zu überwachen, indem unabhängig voneinander der Reifendruck und die Füllgastemperatur mit großer Genauigkeit laufend gemessen werden. Als weiterer Vorteil ist anzusehen, daß mit der erfindungsgemäßen Lösung der thermische Übergangswiderstand des Temperatursensors zum Reifenfüllgas um einige Größenordnungen geringer ist als der zur Felge. Dadurch führen die starken Temperaturunterschiede, die zwischen Radfelge und Reifenluft auftreten können, nicht mehr wie bisher zur Verfälschung der Meßergebnisse des Sensors. So ist es möglich, aus der genauen Temperaturmessung mit der elektronischen Schaltung im Sensor eine temperaturabhängige Korrektur des Reifendruck-Meßwertes in der Weise vorzunehmen, daß kontinuierlich das Reifenfüllgas überwacht wird und bei zu geringer Füllung des Reifens ein Warnsignal ausgelöst wird.

Durch die in den Unteransprüchen aufgeführten Maßnahmen sind vorteilhafte Weiterbildungen und Verbesserungen der im Hauptanspruch angegebenen Merkmale möglich. Dabei ist es zur Ankopplung der Reifenlufttemperatur an den Temperatursensor besonders vorteilhaft, wenn die Folie mit dem Temperatursensor über einen Durchbruch bzw. über eine zentrale Öffnung auf der Innenseite einer die Gehäuseöffnung zum Reifen hin abschließende Abdeckkappe gespannt ist, an der eine besonders gute Verwirbelung der Reifenluft während der Fahrt stattfindet. Um eine Beschädigung der Folie mit dem Temperatursensor bei der Montage oder Demontage des Reifens zu verhindern, wird die Folie zweckmäßigerweise zwischen zwei die Schutzkappe bildende Formbleche eingespannt, welche mit einer nach außen gewölbten Ringwulst versehen sind, durch die die zentrale Öffnung mit der Folie eingefaßt ist. Die Folie selbst kann dabei in vorteilhafter Weise aus einer Grundfolie mit den Leiterbahnen und einem oder mehreren Temperatur-Sensorelementen sowie aus einer Deckfolie zum Schutz gegen die Reifenatmosphäre und gegen geringe mechanische Belastungen bestehen.

### Zeichnung

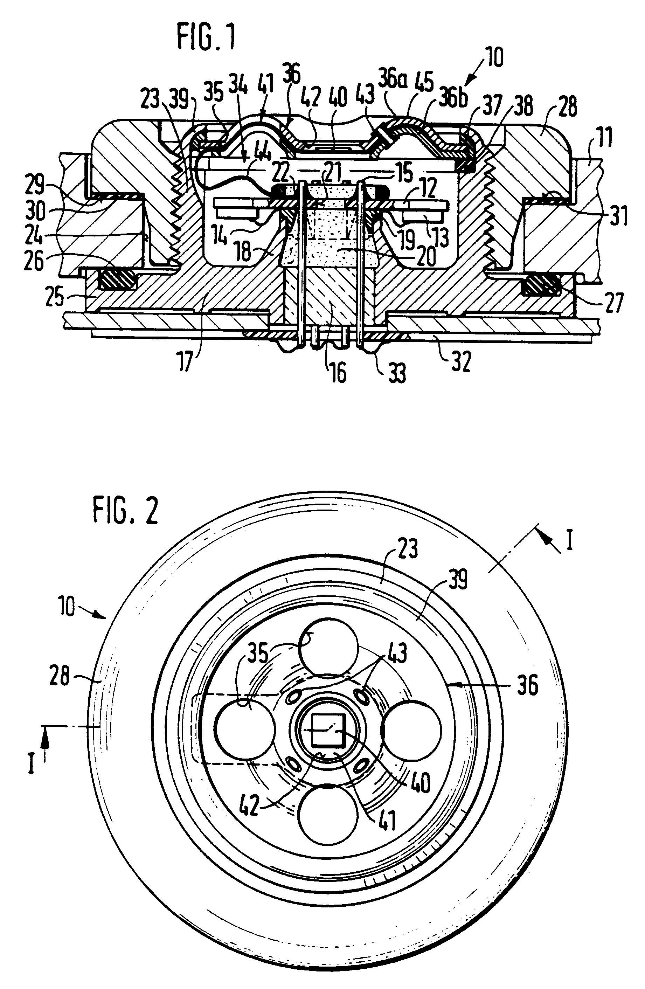

Ein Ausführungsbeispiel der Erfindung ist in der Zeichnung dargestellt und in der nachfolgenden Beschreibung näher erläutert. Es zeigen Figur 1 einen Querschnitt durch einen erfindungsgemäßen Sensor in einer Radfelge in vergrößerter Darstellung und Figur 2 die Ansicht des Drucksensors von oben, ebenfalls in vergrößerter Darstellung.

### Beschreibung des Ausführungsbeispieles

In Figur 1 ist ein Sensor zur Ermittlung von Druck und Temperatur der Luft in einem Fahrzeugreifen mit 10 bezeichnet. Der Sensor 10 ist in eine Radfelge 11 eingesetzt, um entsprechende Meßwerte drahtlos an einer im Fahrzeug in Radnähe fest angeordnete, nicht dargestellte Aufnahmespule zu übertragen, die mit einer Auswerteschaltung verbunden ist. Zur Messung des Reifendruckes sind im äußeren Bereich einer Isolierstoffplatte 12 des Sensors 10 voneinander unabhängig arbeitende Halbleiter-Sensoren in Form von Sensorelementen 13 angeordnet, welche den absoluten Druck der Reifenluft kontinuierlich messen. Die Sensorelemente 11 sind mit ihren Anschlüssen 14 über nicht erkennbare Leiterbahnen der Isolierstoffplatte 12 im zentralen Bereich der Isolierstoffplatte mit Anschlußleitern 15 kontaktiert, die in einer druckdichten Glasdurchführung 16 in einer Bohrung des Sensorgehäuses 17 aufgenommen sind. Am Boden des Sensorsgehäuses 17 ist ein kegelstumpfförmiger Kragen 18 angeformt, der am oberen, die Anschlußleiter 15 umfassenden Ende mit einem Halter 19 die Isolierstoffplatte 12 in ihren zentralen Bereich trägt. Der Hohlraum zwischen der Durchführung 16 und dem Kragen 18 und dem Halter 19 wird mit einem Gießharz 20 ausgefüllt, das durch eine Bohrung 21 in der Mitte der Isolierplatte 12 eingefüllt wird und auch noch die Lötstellen 22 zwischen Anschlußleitern 15 und Leiterbahnen der Isolierstoffplatte 12 mit einbettet. Das metallische Sensorgehäuse 17 ist mit einem Gewindeansatz 23 versehen, der durch eine Bohrung 24 der Radfelge 11 von außen nach innen hindurchragt, wobei das Sensorgehäuse 17 mit einer Ringschulter 25 über einen Dichtring 26 an der außenliegenden Felgenseite angelegt wird. Der Dichtring 26 wird dabei in einer Ringnut 27 in der Schulter 25 des Sensorgehäuses 17 geführt. Auf der Innenseite der Radfelge 11 ist eine kronenförmige Mutter 28 auf den Gewindeansatz 23 des Sensorgehäuses 17 aufgeschraubt, die mit einer Ringschulter 29 über einen Isolierstoffring 30 in der Felgenbohrung 24 festgespannt ist. Der Isolierstoffring 30 ist in einem Ansatz 31 der Felgenbohrung 24 eingelegt, um das Sensorgehäuse 17 von der Radfelge 11 thermisch zu entkoppeln. An der Außenseite des Sensorgehäuses 17 ist eine Platine 32 befestigt, welche eine elektronische Schaltung zur Aufbereitung und Umformung der Sensorsignale trägt und die über Anschlüsse 33 mit den aus der Durchführung 16 vorstehenden Enden der Anschlußleiter 15 kontaktiert ist.

Wie aus Figur 1 erkennbar ist, befindet sich die Isolierstoffplatte 12 mit den Sensorelementen 13 für den Reifendruck in einer zum Reifeninneren hin gerichteten Gehäuseöffnung 34, die von einer mit Durchbrüchen 35 versehenen Abdeckkappe 36 zum Reifen hin abgeschlossen ist. Die Abdeckkappe 36 ist außen in einem Isolierstoffring 37 aufgenommen, der auf einer Ringschulter 38 am Gewindeansatz 23 des Sensorgehäuses 17 aufliegt und dort mit einem Bördelring 39 festgeklemmt ist. Dabei bewirkt der Isolierstoffring 37, daß die Abdeckkappe 36 vom Sensorgehäuse 17 thermisch abgekoppelt wird.

Zur Überwachung der im Reifen vorhandenen Masse des Füllgases ist mindestens ein Temperatursensorelement 40 auf einer Isolierstoffolie 41 aufgebracht, welche über eine zentrale Öffnung 42 der Abdeckappe 36 gespannt ist. Die Sensorelemente 40 zur Temperaturmessung sind über nicht gezeigte Leiterbahnen der Folie 41 und Anschlußleiter 15 mit der elektronischen Schaltung auf der Platine 32 des Sensors 10 verbunden. Die Isolierstoffolie 41 mit den Temperatur-Sensorelomenten 40 ist durch den Isolierstoffring 37 sowohl von der Temperatur des Sensorgehäuses 17 als auch von der Temperatur der Radfelge 11 entkoppelt.

Aus Figur 1 ist ferner erkennbar, daß die Isolierstoffolie 41 zwischen zwei die Abeckkappe 36 bildenden Formblechen 36a und 36b eingespannt ist. Die Sensorelemente 40 zur Temperaturmessung sind dabei aus Dünnschichtwiderständen (Nickel, Platin oder dgl.) hergestellt und mit den Leiterbahnen der Isolierstoffolie 41 kontaktiert. Aus Figur 2 ist gestrichelt angedeutet, daß die Isolierstoffolie 41 durch mehrere um die zentrale Öffnung 42 herum angeordnete Nietverbindungen 43 zwischen den Formblechen 36a und 36b eingespannt ist. Ein seitlich weggeführter Streifen 44 der Isolierstoffolie 41 der die nicht erkennbaren Leiterbahnen zum Anschluß der Temperatur-Sensorelemente 40 trägt, wird gemäß Figur 1 in seinem Endbereich über die Anschlußleiter 15 auf der Isolierstoffplatte 12 fixiert. Die zentrale Öffnung 42 der Formbleche 36a und 36b mit der darin eingespannten, die Temperatur-Sensorelemente 40 tragenden Isolierstoffolie 41 ist von einer nach außen gewölbten Ringwulst 45 der Abdeckkappe 36 umgeben, so daß sie bei der Montage oder Demontage des Reifens gegen mechanische Beschädigung geschützt ist. Aus Figur 2 ist erkennbar, daß für eine gute Luftverwirbelung z.B. vier am Umfang verteilte Löcher als Durchbrüche 35 im Bereich der Ringwulst 45 der Abdeckkappe 36 eingebracht sind.

Um die Temperatur-Sensorelemente 40 gegen geringe mechanische Beanspruchungen sowie gegen die Reifenatmosphäre zu schützen, ist es zweckmäßig, wenn die Isolierstoffolie 41 aus einer Grundfolie besteht, welche die Leiterbahnen sowie die Dünnschichtwiderstände der Sensorelemente 40 trägt, die zusätzlich zum Reifeninneren hin mit einer Deckfolie überzogen ist.

Mit der vorgeschlagenen Anordnung der Temperatur-Sensorelemente ist es möglich, sowohl den Druck p als auch die Temperatur T des Reifenfüllgases mit ausreichender Genauigkeit zu messen, so daß die allgemeine Gasgleichung gilt:

$$p \times V = m \times R \times T. \quad (R = \text{Gaskonstante})$$

Unter der Voraussetzung eines konstanten Reifenvolumens V ergibt sich die Masse m des Reifenfüllgases nach der Gleichung $m = \text{const.} \times p/T$, indem beispielsweise die elektronische Schaltung auf der Platine 32 aus den Meßwerten der Temperatur- und Druck-Sensorelemente 13 und 40 einen Wert für die Masse m des Reifenfüllgases ermittelt und drahtlos auf die Auswerteschaltung im Fahrzeug überträgt. Der dort ermittelte Wert wird mit einem Grenzwert verglichen und bei einer Unterschreitung des Grenzwertes wird ein Alarm ausgelöst. Ebenso kann der übertragene Wert als temperaturunabhängiger Reifendruck zur Anzeige gebracht werden.

Mit dem erfindungsgemäßen Sensor 10 zur Reifendrucküberwachung ist es gelungen, einerseits eine gute thermische Ankopplung an das Reifenfüllgas und andererseits eine ausreichend robuste mechanische Ausführung zu finden, welche auch den erschwerten Betriebsbedingungen und Anforderungen von sicherheitsrelevanten Einrichtungen in Kraftfahrzeugen genügt.

**Patentansprüche**

1. Sensor zur Ermittlung von Druck (p) und Temperatur (T) der Luft in einem Fahrzeugreifen mit mindestens je einem Druck- und Temperatur-Sensorelement (40), das mit einer elektrischen Schaltung (10) verbunden ist, welche die Meßwerte drahtlos auf eine fahrzeugfeste Auswerteschaltung übermittelt und in einer vorderen, zum Reifeninneren gerichteten Öffnung (34) des Sensorgehäuses (17) gegen mechanische Beschädigung zum Reifen hin geschützt angeordnet ist, wobei mindestens ein Temperatur-Sensorelement (40) auf einer in der Gehäuseöffnung (34) von der Reifenluft umgebene und vom Sensorgehäuse (17) thermisch isoliert gehaltene Isolierstoffolie (41) angeordnet ist und über Leiterbahnen der Folie (41) mit der Schaltung des Sensors (10) verbunden ist.

2. Sensor nach Anspruch 1, dadurch gekennzeichnet, daß die Isolierstoffolie (41) über eine zentrale Öffnung (42) einer die Gehäuseöffnung (34) zum Reifen hin abdeckenden Abdeckkappe (36) gespannt ist.

3. Sensor nach Anspruch 2, dadurch gekennzeichnet, daß die Isolierstoffolie (41) auf der zum Substrat (12) hin liegenden Seite der Abdeckkappe (36) über die zentrale Öffnung (42) gespannt ist, wobei die Abdeckkappe (36) am Gehäuserand an der zum Reifeninneren gerichteten Gehäuseöffnung (34) über einen Isolierstoffring (37) festgeklemmt und so von der Temperatur der Radfelge (11) entkoppelt ist.

4. Sensor nach Anspruch 3, dadurch gekennzeichnet, daß die Temperatur-Sensorelemente (40) aus mindestens einem Dünnschichtwiderstand bestehen, der über einen Leiterbahnen tragenden Streifen (44) der Isolierstoffolie (41) mit im Sensorgehäuse (17) druckdicht vergossenen Anschlußleitern (15) kontaktiert ist.

5. Sensor nach einem der vorherigen Ansprüche, dadurch gekennzeichnet, daß die Isolierstoffolie (41) zwischen zwei die Abdeckkappe (36) bildenden Formblechen (36a, 36b) eingespannt ist.

6. Sensor nach Anspruch 5, dadurch gekennzeichnet, daß die Formbleche (36a, 36b) eine die zentrale Öffnung (42) einfassende, nach außen gewölbte Ringwulst (45) aufweisen.

7. Sensor nach Anspruch 5 oder 6, dadurch gekennzeichnet, daß die Formbleche (36a, 36b) die zwischen ihnen eingeklemmte Isolierstoffolie (41) um die zentrale Öffnung (42) herum mit mehreren Nietverbindungen (43) fixieren.

8. Sensor nach einem der vorherigen Ansprüche, dadurch gekennzeichnet, daß die Isolierstoffolie (41) für das mindestens eine Temperatur-Sensorelement (40) aus einer Grundfolie und einer Deckfolie besteht, indem die Grundfolie auf der dem Reifeninneren zugewandten Seite die Temperatur-Sensorelemente (40) sowie die Leiterbahnen trägt und die Deckfolie mindestens die Temperatur-Sensorelemente (40) abdeckt.

**Claims**

1. Sensor for determining pressure (p) and temperature (T) of the air in a vehicle tyre having at least one pressure and temperature sensor element (40) each, which is connected to an electrical circuit (10) which transmits the measured values in a wireless fashion to an evaluation circuit fixed in the vehicle and is arranged in a front opening (34), directed towards the tyre interior, of the sensor housing (17) protected towards the tyre against mechanical damage, at least one temperature sensor element (40) being arranged on an insulating foil (41) which, in the housing opening (34) is surrounded by the tyre air and held thermally insulated from the sensor housing (17), and is connected to the circuit of the sensor (10) via interconnects of the foil (41).

2. Sensor according to Claim 1, characterised in that the insulating foil (41) is stretched over a central opening (42) of a cover cap (36) covering the housing opening (34) towards the tyre.

3. Sensor according to Claim 2, characterised in that the insulating foil (41) is stretched over the central opening (42) on the side of the cover cap (36) located towards the substrate (12), the cover cap (36) being clamped via an insulating ring (37) on the housing rim at the housing opening (34) directed towards the tyre interior and thus being decoupled from the temperature of the wheel rim (11).

4. Sensor according to Claim 3, characterised in that the temperature sensor elements (40) consist of at least one thin-film resistor which is contacted via a strip (44), carrying interconnects, of the insulating film (41) to terminal conductors (15) cast in a pressure tight fashion in the sensor housing (17).

5. Sensor according to one of the preceding claims, characterised in that the insulating foil (41) is clamped between two profiled sheets (36a, 36b) forming the cover cap (36).

6. Sensor according to Claim 5, characterised in that the profiled sheets (36a, 36b) have an outwardly curved annular bulge (45) bordering the central opening (42).

7. Sensor according to Claim 5 or 6, characterised in that the profiled sheets (36a, 36b) fix the insulating foil (41) clamped between them about the central opening (42) by means of a plurality of rivet joints (43).

8. Sensor according to one of the preceding claims, characterised in that the insulating foil (41) for the at least one temperature sensor elements (40) consists of a base foil and a cover foil, the base foil carrying the temperature sensor elements (40) and the interconnects on the side facing the tyre interior, and the cover foil covering at least the temperature sensor elements (40).

**Revendications**

1) Détecteur de pression (p) et de température (T) de l'air d'un pneumatique d'automobile, comportant au moins un élément de détection de pression et de température (40) relié à un circuit électrique (10) qui transmet les valeurs de mesure par une transmission sans fil à un circuit d'exploitation embarqué dans le véhicule, et est placé de manière protégée contre les endommagements mécaniques du côté du pneumatique par une ouverture (34) du boîtier (17) du détecteur, tournée vers l'intérieur du pneumatique, au moins un élément de détecteur de température (40) étant monté sur une feuille isolante (41) maintenue thermiquement isolée par rapport au boîtier (17) du détecteur et qui est entourée par l'air du pneumatique dans l'ouverture (34) du boîtier, et cet élément est relié par les chemins conducteurs de la feuille (41) au circuit du détecteur (10).

2) Détecteur selon la revendication 1, caractérisé en ce que la feuille isolante (41) est fixée sur l'ouverture centrale (42) d'un couvercle (36) qui recouvre l'ouverture (34) du boîtier du côté du pneumatique.

3) Détecteur selon la revendication 2, caractérisé en ce que la feuille (41) isolante est tendue du côté du couvercle (36) tourné vers le support (12) par dessus l'ouverture centrale (42), le couvercle (36) étant serré sur le bord du boîtier au niveau de l'ouverture (34) du boîtier tournée vers l'intérieur du pneumatique, par une bague isolante (37) en étant ainsi découplé de la température de la jante (11).

4) Détecteur selon la revendication 3, caractérisé en ce que les éléments de détection de température (40) se composent d'au moins une résistance en couche mince qui est mise en contact par une bande (40) de la feuille isolante (41) portant les chemins conducteurs, avec des conducteurs (15) de branchement noyés de manière étanche à la pression dans le boîtier (17) du détecteur.

5) Détecteur selon l'une des revendications précédentes, caractérisé en ce que la feuille isolante (41) est serrée entre deux tôles (36a, 36b) mises en forme et qui constituent le couvercle (36).

6) Détecteur selon la revendication 5, caractérisé en ce que les tôles (36a, 36b) comportent un bourrelet annulaire (45) bombé vers l'extérieur et qui entoure l'ouverture centrale (42).

7) Détecteur selon la revendication 5 ou 6, caractérisé en ce que les tôles (36a, 36b) fixent la feuille (41) isolante serrées entre elles autour de l'orifice central (42) avec des liaisons rivetées (43).

8) Détecteur selon l'une des revendications précédentes, caractérisé en ce que la feuille isolante (41) est formée d'une feuille de base et d'une feuille de recouvrement pour au moins l'un des éléments de détection de température (40), du fait que la feuille de base porte sur le côté tourné vers l'intérieur du pneumatique, les éléments de détection de température (40) ainsi que les chemins conducteurs et la feuille de recouvrement recouvre au moins les éléments de détection de température (40).

EP 0 368 947 B1

FIG.1

FIG. 2